# EUROPÄISCHE PATENTSCHRIFT

(11) **EP 1 495 883 B1**
(45) Veröffentlichungstag und Bekanntmachung des Hinweises auf die Patenterteilung: **02.05.2007**
(21) Anmeldenummer: 04015001.3
(22) Anmeldetag: 25.06.2004
(51) Int. Cl.: B60D 1/02

(54) **Anhängekupplung**
Trailer coupling
Attelage de remorque

(30) Priorität: 09.07.2003 DE 10331042
(43) Veröffentlichungstag der Anmeldung: 12.01.2005
(73) Patentinhaber: Schnabl, Peter, 80935 München (DE)
(72) Erfinder: Schnabl, Paul, 80995 München (DE)
(74) Vertreter: Schaumburg, Thoenes, Thurn, Landskron

(56) Entgegenhaltungen:
- EP-A- 1 116 609
- DE-A- 3 223 850
- DE-A- 3 834 305
- DE-A- 4 133 609
- DE-C- 703 811
- FR-A- 1 194 652
- GB-A- 1 594 689
- GB-A- 2 042 449

## Beschreibung

Die Erfindung betrifft eine Anhängekupplung mit einem zur Aufnahme einer Zugöse bestimmten Fangmaul, das mittels eines Zapfens an einer Traverse eines Zugfahrzeuges um eine zur Fahrzeuglängsachse parallele Lagerachse drehbar gelagert ist, und mit einem senkrecht zur Lagerachse gerichteten Kupplungsbolzen, der an dem Fangmaul mittels einer Betätigungsvorrichtung zwischen einer Schließstellung, in der er das Fangmaul und eine in dieses eingreifende Zugöse durchsetzt, und einer Öffnungsstellung verstellbar angeordnet ist, in welcher er aus dem Fangmaul herausgezogen ist, wobei die Betätigungsvorrichtung in einem auf dem Fangmaul befestigten Gehäuse angeordnet ist und einen mit einer Hebelwelle in dem Gehäuse gelagerten Handhebel hat, der über mindestens einen Aufwerfhebel am Kupplungsbolzen zur Verstellung desselben angreift. Eine solche Kupplung ist in der DE 3834305 beschrieben.

Vor allem im land- und forstwirtschaftlichen Bereich können die heute verwendeten Kupplungen gewünschte Eigenschaften wie die Aufnahme hoher Stützlasten, Bedienungs- und Betriebskomfort, kompakter und einfacher Aufbau, nur unzureichend erfüllen.

Ziel der Erfindung ist es, eine Anhängekupplung der eingangs genannten Art anzugeben, die diesen Wünschen besser gerecht wird.

Zur Lösung dieser Aufgabe wird erfindungsgemäß vorgeschlagen, dass auf dem dem Fangmaul fernen Endabschnitt des Kupplungsbolzens ein Aufwerfring gelagert ist, der gegenüber dem Kupplungsbolzen frei drehbar und im wesentlichen axial unverrückbar ist und an seinem Außenumfang mindestens einen radial nach außen ragenden Radialstift trägt, an dem ein Aufwerfhebel angreift, der in Drehmoment übertragender Verbindung mit der Hebelwelle des Handhebels steht.

Damit die Anhängekupplung hohe Stützlasten aufnehmen kann, muss der Abstand zwischen der Kupplungsbolzenachse und dem Lager für den Fangmaulzapfen möglichst gering sein. Die erfindungsgemäße Lösung bietet nun die Möglichkeit, die Betätigungsvorrichtung für den Kupplungsbolzen auf engstem Raum unterzubringen und damit den angegebenen Abstand klein zu halten.

Vorzugsweise trägt der Aufwerfring 42 an seinem Außenumfang zwei diametral radial nach außen ragende Radialstifte 48, an denen jeweils einer von zwei Aufwerfhebeln 60, 62 angreift, die beiderseits des Kupplungsbolzens 28 -in Drehmoment übertragender Verbindung mit der Hebelwelle 56 des Handhebels 52 stehen. Die symmetrische Anordnung der Aufwerfhebel ermöglicht eine gute Kraftübertragung zwischen dem Handhebel und dem Kupplungsbolzen und damit eine bequeme Betätigung der Kupplung. Trotzdem bleibt der Kupplungsbolzen frei drehbar, wodurch sich der Betriebskomfort der Anhängekupplung verbessert.

Um bei einem vorgegebenen Stellweg des Kupplungsbolzens den Abstand zwischen der Achse des Kupplungsbolzens und dem Lager des Fangmaulzapfens möglichst klein zu halten, müssen die Aufwerfhebel möglichst kurz gehalten werden. Dies lässt sich am besten dadurch erreichen, dass die Schwenkachse des bzw. der Aufwerfhebel, d.h. die Hebelwelle des Handhebels annähernd in der Mitte des Stellhubes des Kupplungsbolzens in dem Gehäuse gelagert ist. Bei annähernd vertikaler Bewegung des Kupplungsbolzens liegt also die Schwenkachse der Aufwerfhebel in einer mittleren Höhe zwischen der unteren Endstellung des Aufwerfringes und der oberen Endstellung des Aufwerfringes.

Bei einer bevorzugten Ausführungsform, die eine einfache Montage ermöglicht, ist der Aufwerfring auf einem durchmesserkleineren Endabschnitt des Kupplungsbolzens zwischen einer Schulter desselben und einem Anlagering gelagert, der seinerseits durch einen Sicherungsring an dem durchmesserkleineren Abschnitt des Kupplungsbolzens gehalten ist. Dabei haben der Aufwerfring, der Anlagering und der an den durchmesserkleineren Abschnitt unmittelbar angrenzende Abschnitt des Kupplungsbolzens vorzugsweise gleichen Außendurchmesser, um eine gute Führung des Kupplungsbolzens während seiner Verstellung in der Gehäusebohrung zu gewährleisten.

Der Aufwerfring ist vorzugsweise gegen eine Verdrehung gesichert, was beispielsweise dadurch erfolgen kann, dass die Radialstifte an dem Aufwerfring in an der Innenseite des Gehäuses ausgebildete, parallel zur Achse des Kupplungsbolzens gerichtete Nuten eingreifen.

Die Kopplung zwischen dem Aufwerfring und den Aufwerfhebeln erfolgt zweckmäßigerweise so, dass die Radialstifte an dem Aufwerfring jeweils in einen Schlitz in dem jeweiligen Aufwerfhebel eingreifen.

Der Gesetzgeber verlangt bei einer Anhängekupplung zwei unabhängige Sicherungen, welche den Kupplungsbolzen gegen unbeabsichtigtes Öffnen sichern. Eine solche Sicherung lässt sich bei der erfindungsgemäßen Ausführungsform auf einfache Weise dadurch erreichen, dass an dem der Öffnungsstellung der Aufwerfhebel benachbarten Rand des jeweiligen Schlitzes eine halbkreisförmige Vertiefung so ausgebildet ist, dass der jeweilige Radialstift an dem Aufwerfring in der Schließstellung des Kupplungsbolzens in die Vertiefung einrastet. Eine Öffnung des Kupplungsbolzens durch eine in Richtung seiner Achse wirkende Kraft ist nicht möglich, da sich die Radialstifte in den Vertiefungen verspreizen und damit ein Verschwenken der Aufwerfhebel in Öffnungsrichtung verhindern.

Um zu verhindern, dass die Radialstifte auch in der Öffnungsstellung der Aufwerfhebel in die Vertiefung einfallen, ist an dem Aufwerfring ein Führungsstift in einem Abstand von dem jeweiligen Radialstift so angeordnet, dass er beim Übergang des Aufwerfhebels aus der Öffnungsstellung in die Schließstellung an dem die Vertiefung aufweisenden Schlitzrand geführt ist und damit ein Einfallen des Radialstiftes in die Vertiefung verhindert, bis die Schließstellung des Kupplungsbolzens erreicht ist, wobei in dem Aufwerfhebel eine weitere Aussparung ausgebildet ist, in die der Führungsstift eintauchen kann, wenn der Radialstift in die Vertiefung fällt.

Eine zweite Sicherung des Kupplungsbolzens gegen ein unbeabsichtigtes Öffnen wird erfindungsgemäß dadurch erzielt, dass der Anlagering auf seiner dem Aufwerfring fernen Seite eine Ringschulter hat und dass nahe der der Schließstellung des Kupplungsbolzens entsprechenden Stellung des Anlageringes ein Sicherungshebel um eine zur Kupplungsbolzenachse senkrechte Achse schwenkbar gelagert ist, der zwischen einer Sicherungsstellung, in der er in den Stellweg des Kupplungsbolzens ragt und die Ringschulter des Anlageringes übergreift, und einer Freigabestellung verstellbar ist. Beim Versuch, den Kupplungsbolzen in seine Öffnungsstellung zu verstellen, verspreizt sich der Anlagering mit der Ringschulter an dem Sicherungshebel. Die Aufwerfhebel und der Sicherungshebel sind dabei mit dem Handhebel so gekoppelt, dass sie zu Beginn der Öffnungsbewegung des Handhebels aus ihrer Sicherungsstellung aushebbar sind, bevor sich der Kupplungsbolzen bewegt. Die Aufwerfhebel übertragen eine Öffnungsbewegung auf den Kupplungsbolzen erst, wenn die Radialstifte aus den Vertiefungen in dem Schlitzrand ausgetreten und an dem gegenüberliegenden Schlitzrand anliegen. Dann können sich aber die Radialstifte in Schlitzlängsrichtung frei bewegen, so dass eine Sperre automatisch aufgehoben wird. Das Ausheben des Sicherungshebels wiederum kann durch die anfängliche Bewegung der Aufwerfhebel in Öffnungsrichtung erfolgen. Damit ist auf einfache Weise und ohne weitere mechanische Teile sichergestellt, dass beide Sicherungen zu Beginn des Öffnungsvorganges durch die Betätigung des Handhebels außer Kraft gesetzt werden.

Der Sicherungshebel kann mit einer Stellungsanzeige gekoppelt sein. Vorzugsweise umfasst diese einen Anzeigestift, der in Richtung auf eine an dem Sicherungshebel ausgebildete Nockenbahn vorgespannt ist und die Gehäusewand durchsetzt. Durch diese Nockenbahn wird der Anzeigestift beim Verschwenken des Sicherungshebels in Richtung seiner Stiftachse verstellt, so dass er mehr oder weniger aus der Gehäusewand herausragt. Da der Sicherungshebel nur dann seine Sicherungsstellung einnehmen kann, wenn der Kupplungsbolzen seine Schließstellung erreicht hat, in der auch die Radialstifte des Aufwerfringes in die Vertiefungen an den Aufwerfhebeln einrasten, liefert die Stellungsanzeige eine Anzeige für beide Sicherungen.

Die erfindungsgemäße Anhängekupplung kann auch in einfacher Weise mit einer Schließautomatik kombiniert werden. Hierzu ist der Kupplungsbolzen in seine Schließstellung vorgespannt und in seiner Öffnungsstellung arretierbar, wobei die Betätigungsvorrichtung einen in das Fangmaul ragenden Auslösehebel hat, der durch eine in das Fangmaul einfahrende Zugöse verstellbar ist, um die Arretierung des Kupplungsbolzens zu lösen, so dass dieser unter der Vorspannung in die Schließstellung übergeht. Dieses an sich bekannte Prinzip lässt sich bei der erfindungsgemäßen Anhängekupplung in vorteilhafter Weise dadurch verwirklichen, dass die Hebelwelle des Handhebels drehfest mit zwei Antriebskulissen verbunden ist, die über einen parallel zum Achsabschnitt gerichteten ersten Zylinderstift, der die Antriebskulissen und die beiden Aufwerfhebel in Langlöchern durchsetzt, mit den Aufwerfhebeln in Drehmoment übertragender Verbindung stehen, dass an dem ersten Zylinderstift das eine Ende mindestens einer Feder angreift, deren anderes Ende am Gehäuse angreift und die die Aufwerfhebel in Richtung auf ihre Schließstellung vorspannt, wobei der gehäuseseitige Angriffspunkt der Feder so gewählt ist, dass die Wirkungslinie der Feder beim Verschwenken der Aufwerfhebel aus ihrer der Schließstellung des Kupplungsbolzens entsprechenden Endstellung in ihre der Öffnungsstellung des Kupplungsbolzens entsprechende Endstellung kurz vor Erreichen derselben durch die Achse der Hebelwelle tritt, dass zwischen beiden Antriebskulissen der Auslösehebel frei drehbar auf dem Achsabschnitt des Handhebels gelagert und durch eine Feder in eine Stellung vorgespannt ist, in der sein freies Ende in das Fangmaul ragt und dass der Auslösehebel an dem Umfang seines Endes, das dem in das Fangmaul ragenden Ende entgegengesetzt ist, eine mit dem ersten Zylinderstift zusammenwirkende Nockenbahn hat. Durch die vorstehend beschriebene Anordnung der Feder wird der Kupplungsbolzen durch die Feder in seiner Öffnungsstellung festgehalten. Die Nockenbahn an dem Auslesehebel ist nun so geformt, dass beim Verschwenken des Auslösehebels durch die einfahrende Zugöse der erste Zylinderstift und mit ihm der Angriffspunkt der Feder aus der Übertotpunktlage in eine Stellung gehoben werden, in der die Feder die Aufwerfhebel in Schließrichtung verschwenkt.

Um den Auslösehebel bei geöffnetem Kupplungsbolzen in einer definierten Stellung zu halten, hat die Nockenbahn eine Vertiefung, in die der erste Zylinderstift in der der Öffnungsstellung des Kupplungsbolzens entsprechenden Endstellung der Aufwerfhebel einfällt.

Zur Vereinfachung der Montage sind die Antriebskulissen mit der Hebelwelle durch in radiale Bohrungen derselben eingesetzte Stifte drehfest verbunden. Die beiden Aufwerfhebel können durch einen zweiten parallel zur Hebelwelle gerichteten Zylinderstift so miteinander verbunden sein, dass der zweite Zylinderstift in der der Schließstellung des Kupplungsbolzens entsprechenden Endstellung der Aufwerfhebel an dem Auslösehebel anliegt und diesen in eine der Zugöse ferne Stellung vorspannt.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigen:
- Fig. 1: eine Seitenansicht einer erfindungsgemäßen Anhängekupplung mit geschlossenem Kupplungsbolzen und Zugöse unter Einschluß unsichtbarer Linien,
- Fig. 2: einen Schnitt entlang Linie II-II in Figur 1,
- Fig. 3: eine Draufsicht auf die in Figur 1 dargestellte Anhängekupplung,
- Fig. 4: einen der Figur 2 entsprechenden Teilschnitt durch die Betätigungsvorrichtung der Anhängekupplung mit dem Kupplungsbolzen in seiner Öffnungsstellung,
- Fig. 5: eine der Figur 1 entsprechende Ansicht zu Beginn der Öffnung der Kupplung,
- Fig. 6: einen Teilschnitt entlang Linie VI-VI in Figur 5,
- Fig. 7: einen Schnitt entlang Linie VII-VII in Figur 2,
- Fig. 8 bis 11: schematische Teildarstellungen, welche den Aufwerfhebel in verschiedenen Positionen zeigen,
- Fig. 12: einen Teilschnitt durch die Betätigungsvorrichtung im Bereich der Handhebelwelle entlang der Linie XII-XII in Figur 1,
- Fig. 13 bis 17: teilweise schematische Seitenansichten der Betätigungsvorrichtung und des Kupplungsbolzens in verschiedenen Stellungen zur Erläuterung der Arbeitsweise der Kupplungsautomatik und
- Fig. 18 bis 22: den Figuren 13 bis 17 entsprechende vergrößerte Detaildarstellungen zur Erläuterung der Kupplungsautomatik.

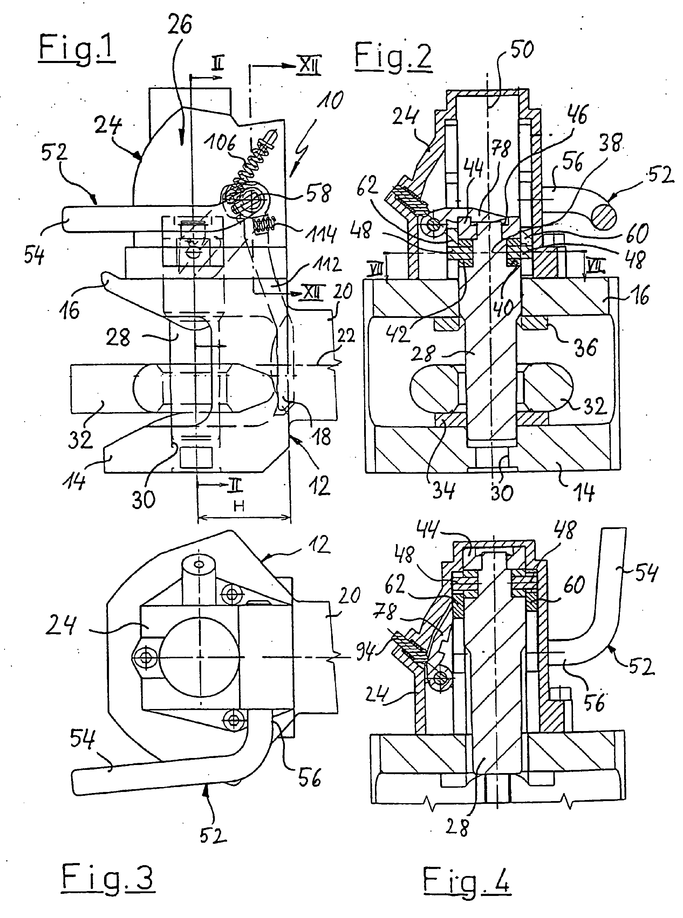

Die in der Figur 1 dargestellte allgemein mit 10 bezeichnete Anhängekupplung umfasst ein Fangmaul 12, mit einem unteren Fangmaullappen 14 und einem oberen Fangmaullappen 16, die durch eine Rückwand 18 miteinander verbunden sind. Einstückig mit der Rückwand 18 ist ein Lagerzapfen 20 angeordnet, mit dem die Anhängekupplung 10 in einem Lager an einer Traverse eines Zugfahrzeuges so gelagert ist, dass sie um die Zapfenachse 22 schwenkbar ist.

Auf der Oberseite des oberen Fangmaullappens 16 ist ein Automatikgehäuse 24 befestigt, das eine Betätigungsvorrichtung 26 für einen Kupplungsbolzen 28 aufnimmt, der in dem Automatikgehäuse 24 und dem oberen Fangmaullappen 16 geführt ist und in seiner Schließstellung gemäß Figur 1 in eine Bohrung 30 des unteren Fangmaullappens 14 eingreift, wobei er eine in das Fangmaul 12 eingefahrene Zugöse 32 durchsetzt. Die Zugöse 32 kann sich zwischen einem Auflagering 34 und einem Anschlagring 36 bewegen, die jeweils aus einem elastischen Material bestehen und den Kupplungsbolzen 28 umgebend an der jeweiligen Innenfläche des unteren Fangmaullappens 14 bzw. des oberen Fangmaullappens 16 angeordnet sind (Figur 2).

Im folgenden soll die Betätigungsvorrichtung der Anhängekupplung 10 näher erläutert werden.

Der Kupplungsbolzen 28 hat an seinem oberen Ende einen durchmesserkleineren Abschnitt 38, der von dem angrenzenden durchmessergrößeren Abschnitt des Kupplungsbolzens durch eine Ringschulter 40 abgesetzt ist. Auf dem durchmesserkleineren Abschnitt 38 sitzt ein frei drehbarer Aufwerfring 42, der durch einen Anlagering 44 in seiner Position gehalten wird. Letzterer ist durch einen Sicherungsring 46 an dem Kupplungsbolzen 28 gesichert. Auch der Anlagering 44 ist gegenüber dem Kupplungsbolzen 28 frei drehbar.

In den Aufwerfring 42 sind einander diametral entgegengesetzt zwei Radialstifte 48 gesteckt, die radial über den Außenumfang des Aufwerfringes 42 hinausragen.

Zur Verstellung des Kupplungsbolzens 28 in Richtung seiner Längsachse 50 aus der in der Figur 1 dargestellten Schließstellung in eine angehobene Öffnungsstellung (Figur 4) dient ein Handhebel 52 mit einem Griffabschnitt 54 und einer einstückig mit diesem ausgebildeten Hebelwelle 56, mit der der Handhebel 52 in dem Automatikgehäuse 24 um eine Achse 58 schwenkbar gelagert ist.

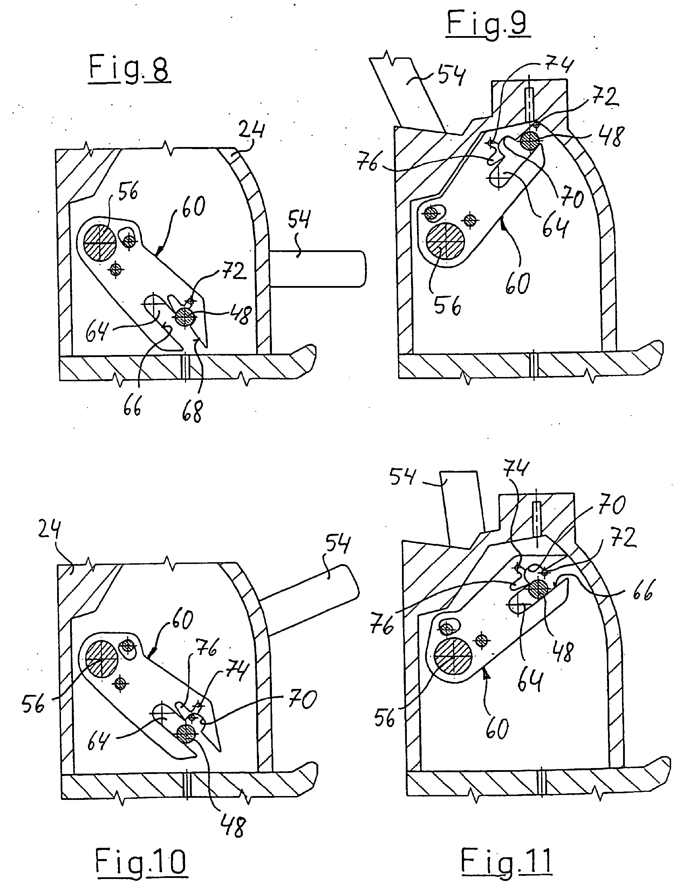

Auf die Hebelwelle 56 sind zwei Aufwerfhebel 60, 62 aufgesteckt, die in später noch genauer zu beschreibender Weise mit der Hebelwelle 56 in Drehmoment übertragender Verbindung stehen und beiderseits des Kupplungsbolzens 28 positioniert sind. Die beiden Aufwerfhebel 60 und 62, von denen in den Figuren 8 bis 11 nur der rechte Aufwerfhebel 60 genauer dargestellt ist, haben einen mindestens annähernd radial zu ihrer Schwenkachse verlaufenden Schlitz 64 zur Aufnahme jeweils eines Radialstiftes 48 an dem Aufwerfring 42. Wird der Handhebel 52 verschwenkt, werden auch die Aufwerfhebel 60, 62 verschwenkt, wobei sie über die Radialstifte 48 den Kupplungsbolzen 28 mitverstellen. Dabei gleiten die Radialstifte 48 jeweils zwischen dem unteren Schlitzrand 66 und dem oberen Schlitzrand 68.

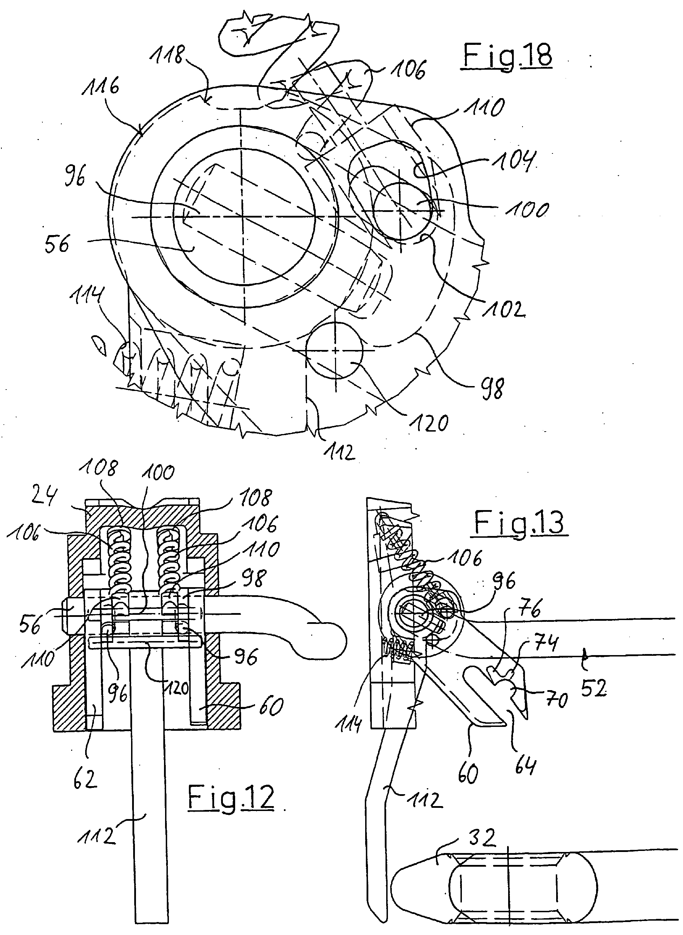

In dem oberen Schlitzrand 68 mindestens eines Aufwerfhebels, im dargestellten Fall des rechten Aufwerfhebels 60, ist eine halbkreisförmige Vertiefung 70 ausgebildet, in welche der zugehörige Radialstift 48 eintauchen kann (Figur 8), wenn sich der Kupplungsbolzen 28 in seiner in der Figur 1 dargestellten Schließstellung befindet und somit der Aufwerfhebel 60 seine tiefste Lage eingenommen hat. Wird aus dieser Stellung heraus der Kupplungsbolzen 28 durch von der Zugöse 32 herrührende Kräfte in Öffnungsrichtung bewegt, so verspreizt sich der Radialstift 48 in der Vertiefung 70, d.h. der Aufwerfhebel 60 sperrt eine solche Bewegung des Kupplungsbolzens. Der Aufwerfhebel 60 muss erst in die in der Figur 10 dargestellte Stellung angehoben, d.h. entsichert oder entriegelt werden, bevor nun auch der Kupplungsbolzen 28 in Öffnungsrichtung bewegt werden kann. Wird der Aufwerfhebel aus der in der Figur 10 dargestellten Stellung über den Handhebel 52 in die in der Figur 9 dargestellte, der Öffnungsstellung des Kupplungsbolzens 28 entsprechende Endstellung im Gegenuhrzeigersinn verschwenkt, so durchläuft der zugehörige Radialstift 48 den Schlitz 64 zunächst in Richtung auf dessen inneres geschlossenes Ende und anschließend wieder in Richtung auf das offene äußere Ende des Schlitzes hin. Wird die Kupplung wieder geschlossen, wobei sich der Aufwerfhebel aus der in der Figur 9 dargestellten Stellung im Uhrzeigersinn in die in der Figur 10 dargestellte Stellung dreht, könnte der Radialstift 48 in die Vertiefung 70 einrasten und würde eine weitere Abwärtsbewegung des Aufwerfhebels 60 sperren. Um dies zu verhindern, trägt der Aufwerfring an seinem Außenumfang einen Führungsstift 72, der einen radialen Abstand von dem Radialstift 48 hat und am oberen Schlitzrand 68 geführt ist. Der Abstand zwischen dem Führungsstift 72 und dem Radialstift 48 ist so bemessen, dass der Führungsstift 72 erst dann in den Bereich der Vertiefung 70 gelangt, wenn der Radialstift 48 die Vertiefung 70 bereits passiert hat und wieder an dem oberen Schlitzrand 68 anliegt, wie dies Figur 11 zeigt. In dem Aufwerfhebel 60 sind noch zwei weitere Aussparungen 74 und 76 ausgebildet, wobei die Aussparung 74 den Führungsstift 72 in der in der Figur 8 dargestellten Sicherungs- oder Verriegelungsstellung des Aufwerfhebels 60 und die Aussparung 76 den Führungsstift 72 während der Verstellung des Aufwerfhebels aus der Stellung gemäß Figur 10 in die Stellung gemäß Figur 9 vorrübergehend aufnehmen kann.

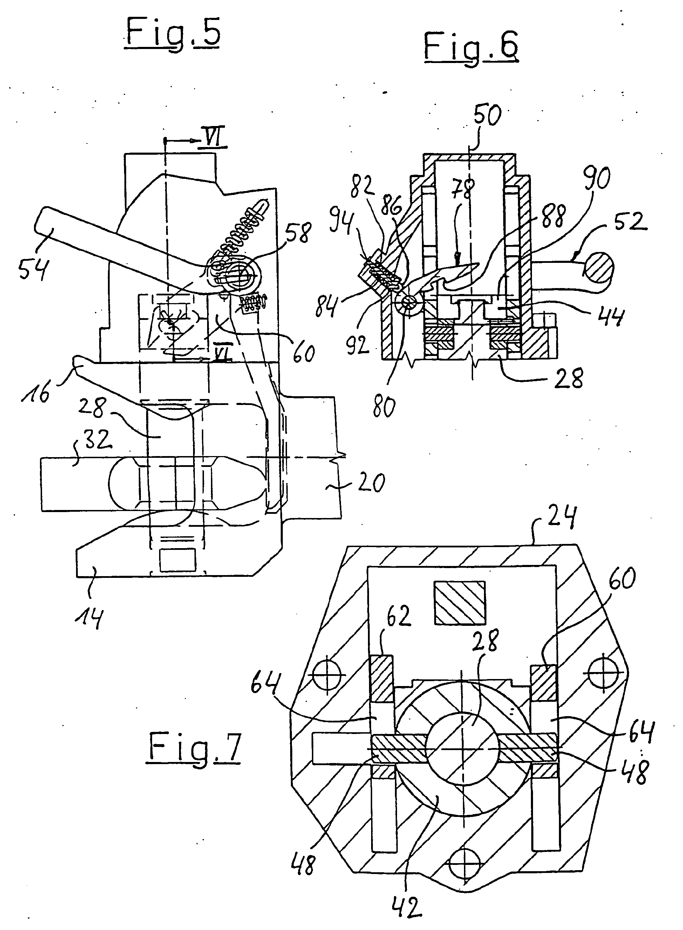

Neben der anhand der Figuren 8 bis 11 erläuterten ersten Sicherung des Kupplungsbolzens 28 gegen ein unbeabsichtigtes Öffnen ist noch eine zweite Sicherung vorgesehen, die anhand der Figuren 2, 4 und 6 näher erläutert werden soll. Sie umfasst einen Sicherungshebel 78, der um eine zur Kupplungsbolzenachse 50 senkrechte Achse 80 an einer Stelle schwenkbar gelagert ist, welche in etwa der axialen Position des Anlageringes 44 in der Schließstellung des Kupplungsbolzens 28 entspricht (Figur 2). Der Sicherungshebel kann zwischen einer in Figur 2 wiedergegebenen Sicherungsstellung, in welcher er in den Stellweg des Kupplungsbolzens 28 ragt und einer aus dem Stellweg des Kupplungsbolzens 28 ausgerückten Stellung gemäß Figur 4 verschwenkt werden, wobei er durch eine Schraubendruckfeder 82 in seine Sicherungsstellung gemäß Figur 2 vorgespannt ist. Die Druckfeder 82 ist in einer Federtasche 84 des Gehäuses angeordnet und wirkt über ein Druckelement 92, das an seinem dem Sicherungshebel zugewandten Ende sphärisch abgerundet ist oder eine Rolle 86 trägt, auf die Außenkontur des Sicherungshebels 78 (Fig.6). An seiner dem Anlagering 44 zugewandten Unterseite hat der Sicherungshebel 78 eine Nut 88, in welche in der in Figur 2 dargestellten Sicherungsstellung des Sicherungshebels 78 eine an dem Anlagering 44 ausgebildete Ringschulter 90 eintaucht. Wird versucht, durch eine von der Zugöse 32 herrührende Kraft den Kupplungsbolzen 28 in Richtung auf seine Öffnungsstellung zu verschieben, so verspreizt sich der Anlagering 44 in der Nut 88 des Sicherungshebels 78, wodurch eine Bewegung des Kupplungsbolzens 28 in Richtung auf seine Öffnungsstellung verhindert wird.

Der Sicherungshebel 78 liegt an einer Kontur des linken Aufwerfhebels 62 an, so dass er durch diesen aus der in der Figur 2 dargestellten Sicherungsstellung ausgehoben wird, wenn die Aufwerfhebel 60 und 62 zu Beginn des Öffnungsvorganges durch den Handhebel 52 verschwenkt werden. Das heißt, sowohl die durch den rechten Aufwerfhebel 60 gebildete erste Sicherung als auch die durch den Sicherungshebel 78 gebildete zweite Sicherung werden zu Beginn des Öffnungsvorganges durch den Handhebel entsichert, so dass der Kupplungsbolzen 28 anschließend frei in seiner Öffnungsstellung bewegt werden kann.

Mit dem Druckelement 92, an dem die Rolle 86 gelagert ist und auf den die Druckfeder 82 einwirkt, ist ein Anzeigestift 94 verbunden, der die Wand des Gehäuses 24 durchsetzt und entsprechend der Stellung des Sicherungshebels 78 mehr oder weniger weit über die Gehäusewand hinaus steht, wie ein Vergleich der Figuren 2 und 4 zeigt. Damit kann an der Stellung des Anzeigestiftes 94 die Stellung des Sicherungshebels 78 kontrolliert werden.

Anhand der Figuren 12 bis 22 soll nun der Aufbau der Kupplungsautomatik und ihre Funktionsweise erläutert werden.

Alle drehbaren Antriebselemente sind auf der Hebelwelle 56 des Handhebels 52 zusammengefasst. Die Hebelwelle hat lediglich zwei Bohrungen zur Aufnahme je eines zylindrischen Stiftes 96, welche ein am Handhebel eingeleitetes Drehmoment an je eine scheibenförmige, auf die Hebelwelle 56 aufgesteckte Antriebskulisse 98 übertragen. Von den Antriebskulissen 98 wird das Drehmoment über einen achsparallel gerichteten ersten Zylinderstift 100 weitergeleitet. Dieser Zylinderstift durchsetzt die Antriebskulissen 98 und die Aufwerfhebel 60, 62 in Langlöchern 102 bzw. 104 und ist gegen eine axiale Verschiebung an der Innenwand des Automatikgehäuses geführt, so dass es keiner Sicherung dieses Stiftes bedarf. Auf den Zylinderstift 100 wirken zwei Schraubendruckfedern 106 ein, die sich jeweils über ein Kugelgelenk 108 am Gehäuse 24 und über einen Druckschuh 110 am Zylinderstift 100 abstützen. Die Druckfedern spannen die Aufwerfhebel 60, 62 und damit den Kupplungsbolzen 28 in dessen Schließstellung vor.

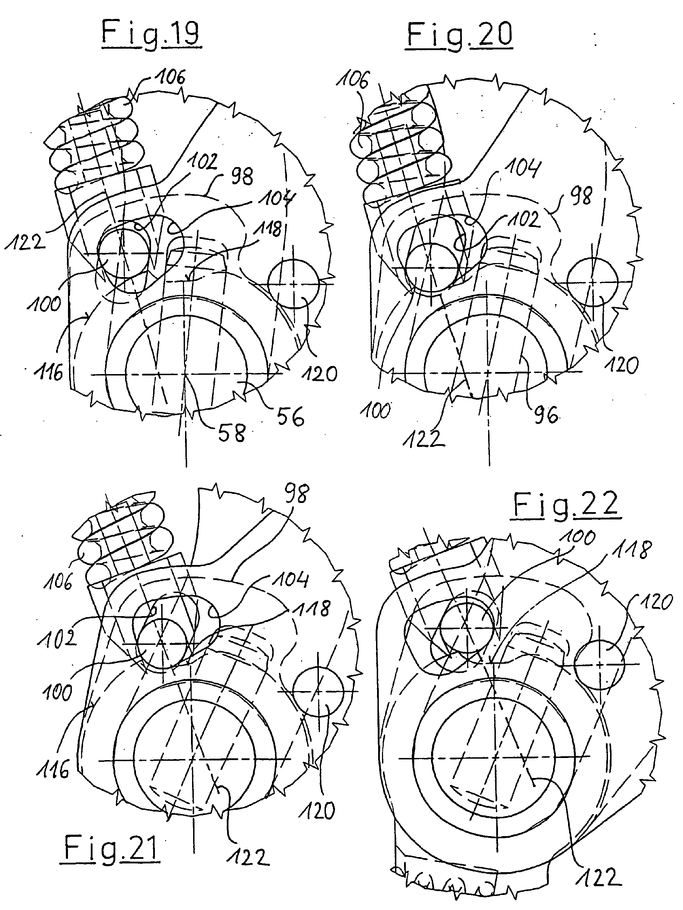

Zwischen den beiden Druckschuhen 110 ist auf der Hebelwelle 56 ein Auslösehebel 112 frei schwenkbar gelagert, der mit seinem freien Ende in das Fangmaul 12 hineinragt (Figur 1) und durch eine Druckfeder 114, die sich an dem Gehäuse 24 abstützt, in Richtung auf den Kupplungsbolzen 28 vorgespannt wird. An seinem Lagerende, d.h. an dem seinem freien Ende entgegengesetzten Ende hat der Auslösehebel 112 eine Nockenbahn 116 mit einer Vertiefung 118 (Figur 18), die mit dem ersten Zylinderstift 100 in noch zu beschreibender Weise zusammenwirkt.

Die Aufwerfhebel 60, 62 sind ferner durch einen zweiten Zylinderstift 120 miteinander verbunden, der ebenfalls axial an der Innenwand des Gehäuses 24 geführt ist und den Auslösehebel 112 in der Schließstellung des Kupplungsbolzens in eine von dem Kupplungsbolzen ferne Stellung drückt (Figur 13), um so zu verhindern, dass der Auslösehebel bei eingefahrener und eingekuppelter Zugöse an dieser anliegt.

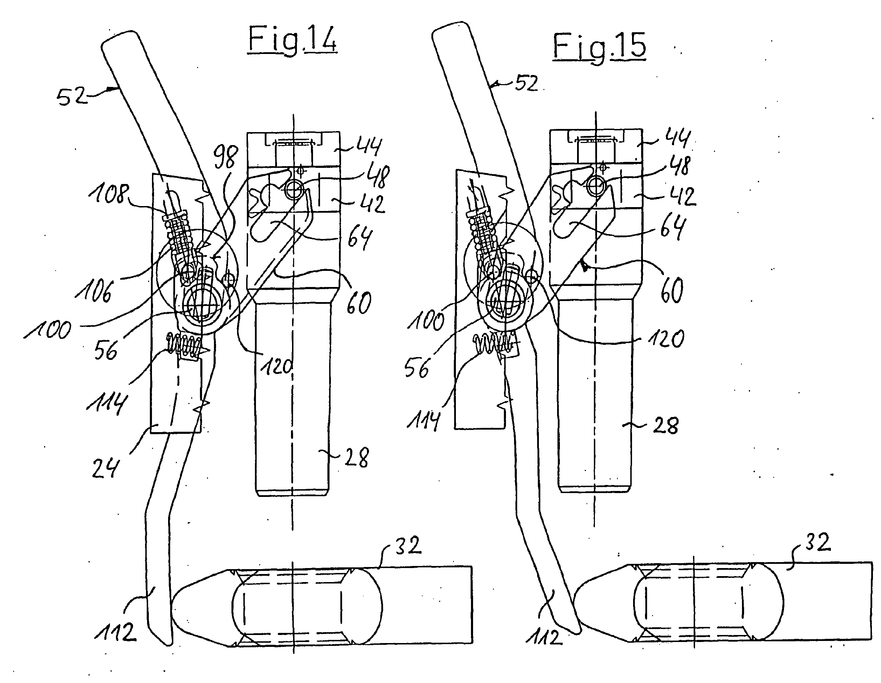

Wird die Kupplung geöffnet und der Handhebel 52 in seine maximale Öffnungsstellung verstellt, erhält man die aus den Figuren 14 und 19 ersichtliche Stellung der Betätigungsvorrichtung. Der Auslösehebel wird durch die noch in dem Fangmaul stehende Zugöse in seiner zurückgeschobenen Position gehalten. Die Lage des ersten Zylinderstiftes 100 wird durch die Nockenbahn 116 des Auslösehebels 112 bestimmt. Die Wirkungslinie 122 der Druckfedern 106 geht in Figur 19 links an der Achse 58 der Hebelwelle 56 vorbei. Wird die Zugöse 32 aus dem Fangmaul 12 herausgezogen (Figur 15), so wird der Auslösehebel 112 durch die Wirkung der Feder 114 in Richtung auf den Kupplungsbolzen 28 bewegt. Gleichzeitig tritt der erste Zylinderstift 100 in die Vertiefung 118 der Nockenbahn 116 ein (Figur 20). Die Anhängekupplung ist zum Einkuppeln bereit. Die Wirkungslinie 122 der Druckfeder 106 liegt aber immer noch links von der Achse 58 der Hebelwelle 56, d.h. in der Übertotpunktlage, so dass die Offenhaltung der Kupplung garantiert ist.

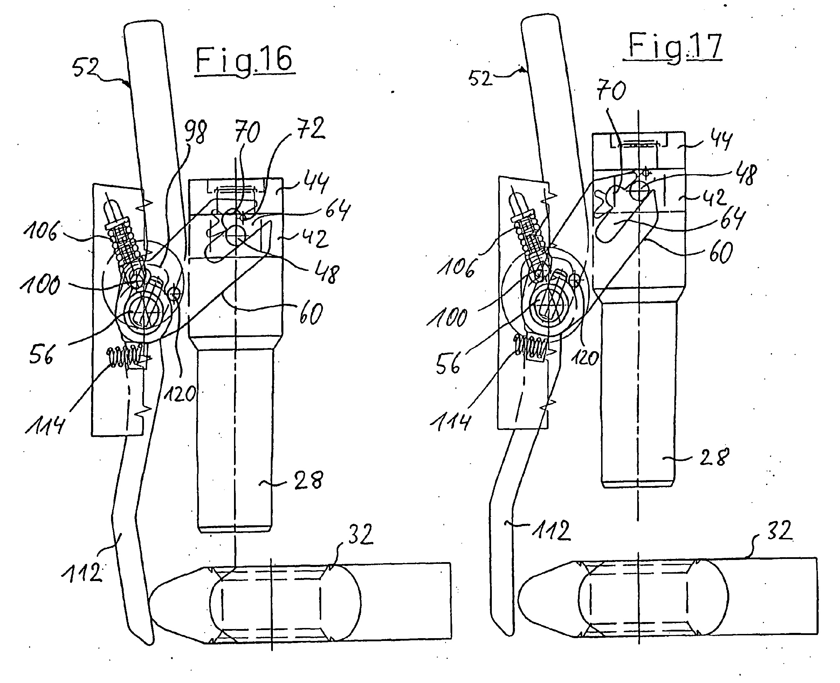

Beim automatischen Ankuppelvorgang wird die Zugöse 32 in das Fangmaul 12 geschoben (Figuren 16 und 21). Dabei wird der Auslösehebel im Uhrzeigersinn verschwenkt und nimmt über den Rand der Vertiefung 118 den Zylinderstift 100 mit, so dass die Wirklinie 122 durch die Achse 58 der Hebelwelle 56 hindurch auf die rechte Seite der Achse 58 tritt. Die Wirklinie 122 verlässt also die Übertotpunktlage und die Kupplung beginnt sich unter dem Druck der Druckfedern 106 zu schließen, bis sie die in den Figuren 13 und 18 dargestellte Lage erreicht.

Die Figuren 17 und 22 zeigen die Kupplung für den Fall, dass die Zugöse 32 mit sehr hoher Geschwindigkeit in das Fangmaul 12 eingefahren wird. In diesem Falle ist die Betätigungsvorrichtung aufgrund der Trägheit der sie bildenden Teile nicht in der Lage, den Schließvorgang mit dieser hohen Geschwindigkeit schadlos auszuführen. In einem solchen Fall wird der Zylinderstift 100 aus der Vertiefung 118 ausgehoben. Es stellt sich eine Position ein wie in den Figuren 14 und 19 gezeigt. Der Ankuppelvorgang muss also nochmals mit verminderter Geschwindigkeit wiederholt werden. Oder es ergibt sich eine Position, wie sie in der Figur 17 dargestellt ist, d.h. die Wirklinie 122 hat bereits ihre Übertotpunktlage verlassen und die Kupplung beginnt sich verzögert zu schließen.

## Patentansprüche

1. Anhängekupplung mit einem zur Aufnahme einer Zugöse (32) bestimmten Fangmaul (12), das mittels eines Zapfens (20) an einer Traverse eines Zugfahrzeuges um eine zur Fahrzeuglängsachse parallele Lagerachse (22) drehbar gelagert ist, und mit einem senkrecht zur Lagerachse (22) gerichteten Kupplungsbolzen (28), der an dem Fangmaul (12) mittels einer Betätigungsvorrichtung (26) zwischen einer Schließstellung, in der er das Fangmaul (12) und eine in dieses eingreifende Zugöse (32) durchsetzt, und einer Öffnungsstellung, in welcher er aus dem Fangmaul (12) herausgezogen ist, verstellbar angeordnet ist, wobei die Betätigungsvorrichtung (26) in einem auf dem Fangmaul (12) befestigten Gehäuse (24) angeordnet ist und einen mit einer Hebelwelle (56) in dem Gehäuse (24) gelagerten Handhebel (52) hat, der über mindestens einen Aufwerfhebel (60, 62) am Kupplungsbolzen (28) zur Verstellung desselben angreift, **dadurch gekennzeichnet, dass** auf dem dem Fangmaul (12) fernen Endabschnitt (38) des Kupplungsbolzens (28) ein Aufwerfring (42) gelagert ist, der gegenüber dem Kupplungsbolzen (28) frei drehbar und im wesentlichen axial unverrückbar ist und an seinem Außenumfang mindestens einen radial nach außen ragenden Radialstift (48) trägt, an dem ein Aufwerfhebel (60, 62) angreift, der in Drehmoment übertragender Verbindung mit der Hebelwelle (56) des Handhebels (52) steht.

2. Anhängekupplung nach Anspruch 1, **dadurch gekennzeichnet, dass** der Aufwerfring (42) an seinem Außenumfang zwei diametral radial nach außen ragende Radialstifte (48) trägt, an denen jeweils einer von zwei Aufwerfhebeln (60, 62) angreift, die beiderseits des Kupplungsbolzens (28) in Drehmoment übertragender Verbindung mit der Hebelwelle (56) des Handhebels (52) stehen.

3. Anhängekupplung nach Anspruch 1 oder 2, **dadurch gekennzeichnet, dass** die Hebelwelle (56) annähernd in der Mitte des Stellhubes des Kupplungsbolzens (28) in dem Gehäuse (24) gelagert ist.

4. Anhängekupplung nach einem der Ansprüche 1 bis 3, **dadurch gekennzeichnet, dass** der Aufwerfring (42) auf einem durchmesserkleineren Endabschnitt (38) des Kupplungsbolzens (28) zwischen einer Schulter (40) des Kupplungsbolzens (28) und einem Anlagering (44) gelagert ist, der seinerseits durch einen Sicherungsring (46) an dem durchmesserkleineren Abschnitt (38) des Kupplungsbolzens (28) gehalten ist.

5. Anhängekupplung nach Anspruch 4, **dadurch gekennzeichnet, dass** der Aufwerfring (42), der Anlagering (44) und der an den durchmesserkleineren Abschnitt (38) unmittelbar angrenzende Abschnitt des Kupplungsbolzens (28) im wesentlichen gleichen Außendurchmesser haben.

6. Anhängekupplung nach einem der Ansprüche 1 bis 5, **dadurch gekennzeichnet, dass** der Aufwerfring unverdrehbar, aber in Achsrichtung des Kupplungsbolzens (28) verstellbar in dem Gehäuse (24) geführt ist.

7. Anhängekupplung nach einem der Ansprüche 1 bis 6, **dadurch gekennzeichnet, dass** die Radialstifte (48) an dem Aufwerfring (42) jeweils in einen Schlitz (64) in dem jeweiligen Aufwerfhebel (60, 62) eingreifen.

8. Anhängekupplung nach Anspruch 7, **dadurch gekennzeichnet, dass** an dem der Öffnungsstellung des Aufwerfhebels näher liegenden Rand (68) des jeweiligen Schlitzes (64) eine halbkreisförmige Vertiefung (70) so ausgebildet ist, dass der jeweilige Radialstift (48) an dem Aufwerfring (42) in der Schließstellung des Kupplungsbolzens (28) in die Vertiefung (70) einrastet.

9. Anhängekupplung nach Anspruch 8, **dadurch gekennzeichnet, dass** an dem Aufwerfring (42) ein Führungsstift (72) in einem Abstand von dem jeweiligen Radialstift (48) so angeordnet ist, dass er beim Übergang des Aufwerfhebels (60) aus der Öffnungsstellung in die Schließstellung an dem die Vertiefung (70) aufweisenden Schlitzrand (68) geführt ist und ein Einfallen des Radialstiftes (48) in die Vertiefung (70) verhindert, bis die Schließstellung des Kupplungsbolzens (28) erreicht ist, und dass in dem Aufwerfhebel (60) eine weitere Aussparung (74) ausgebildet ist, in die der Führungsstift (72) eintaucht, wenn der Radialstift (48) in die Vertiefung (70) fällt.

10. Anhängekupplung nach einem der Ansprüche 4 bis 9, **dadurch gekennzeichnet, dass** der Anlagering (44) auf seiner dem Aufwerfring (42) fernen Seite eine Ringschulter (90) hat und dass nahe der der Schließstellung des Kupplungsbolzens (28) entsprechenden Stellung des Anlageringes (44) ein Sicherungshebel (78) um eine zur Kupplungsbolzenachse (50) senkrechte Achse (80) schwenkbar gelagert ist, der zwischen einer Sicherungsstellung, in der er in den Stellweg des Kupplungsbolzens (28) ragt und die Ringschulter (90) des Anlageringes (44) übergreift, und einer Freigabestellung verstellbar ist.

11. Anhängekupplung nach Anspruch 10, **dadurch gekennzeichnet, dass** der Sicherungshebel (78) mit einer Stellungsanzeige (94) gekoppelt ist.

12. Anhängekupplung nach Anspruch 11, **dadurch gekennzeichnet, dass** die Stellungsanzeige einen Anzeigestift (94) hat, der in Richtung auf eine an dem Sicherungshebel (78) ausgebildete Nockenbahn vorgespannt ist und die Gehäusewand durchsetzt.

13. Anhängekupplung nach einem der Ansprüche 1 bis 12, **dadurch gekennzeichnet, dass** der Kupplungsbolzen (28) in seine Schließstellung vorgespannt und in seiner Öffnungsstellung arretierbar ist und dass die Betätigungsvorrichtung (26) einen in das Fangmaul (12) ragenden Auslösehebel (112) hat, der durch eine in das Fangmaul einfahrende Zugöse (32) verstellbar ist, um die Arretierung des Kupplungsbolzens (28) zu lösen, so dass dieser unter der Vorspannung in die Schließstellung übergeht.

14. Anhängekupplung nach Anspruch 13, **dadurch gekennzeichnet, dass** die Hebelwelle (56) des Handhebels (52) drehfest mit zwei Antriebskulissen (98) verbunden ist, die über einen parallel zur Hebelwelle (56) gerichteten ersten Zylinderstift (100), der die Antriebskulissen (98) und die beiden Aufwerfhebel (60, 62) in Langlöchern (104, 106) durchsetzt, mit den Aufwerfhebeln (60, 62) in Drehmoment übertragender Verbindung stehen, dass an dem ersten Zylinderstift (100) das eine Ende mindestens einer Feder (106) angreift, deren anderes Ende am Gehäuse (24) angreift und die die Aufwerfhebel (60, 62) in Richtung auf ihre Schließstellung vorspannt, wobei der gehäuseseitige Angriffspunkt der Feder (106) so gewählt ist, dass die Wirkungslinie (122) der Feder (106) beim Verschwenken der Aufwerfhebel (60, 62) aus ihrer der Schließstellung des Kupplungsbolzens entsprechenden Endstellung in ihre der Öffnungsstellung des Kupplungsbolzens (28) entsprechende Endstellung kurz vor Erreichen derselben durch die Achse (58) der Hebelwelle (56) tritt, dass zwischen beiden Antriebskulissen (98) der Auslösehebel (112) frei drehbar auf der Hebelwelle (56) gelagert und durch eine Feder (114) in eine Stellung vorgespannt ist, in der sein freies Ende in das Fangmaul (12) ragt, und dass der Auslösehebel (112) an dem Umfang seines Endes, das dem in das Fangmaul (12) ragenden Ende entgegengesetzt ist, eine mit dem ersten Zylinderstift (100) zusammenwirkende Nockenbahn (116) hat.

15. Anhängekupplung nach Anspruch 14, **dadurch gekennzeichnet, dass** die Nockenbahn (116) eine Vertiefung (118) umfasst, in die der erste Zylinderstift (100) in der der Öffnungsstellung des Kupplungsbolzens (28) entsprechenden Endstellung der Aufwerfhebel (60, 62) einfällt.

16. Anhängekupplung nach Anspruch 14 oder 15, **dadurch gekennzeichnet, dass** die Antriebskulissen (98) mit der Hebelwelle (56) durch in radialen Bohrungen eingesetzte Stifte (96) drehfest verbunden sind.

17. Anhängekupplung nach einem der Ansprüche 14 bis 16, **dadurch gekennzeichnet, dass** die beiden Aufwerfhebel (60, 62) durch einen zweiten parallel zur Hebelwelle (56) des Handhebels (52) gerichteten Zylinderstift so miteinander verbunden sind, dass der zweite Zylinderstift in der der Schließstellung des Kupplungsbolzens (28) entsprechenden Endstellung der Aufwerfhebel (60, 62) an dem Auslösehebel (14) anliegt und diesen in eine der Zugöse (32) ferne Stellung vorspannt.

## Claims

1. Trailer coupling with a coupling jaw (12) intended to receive a coupling ring (20) which, by means of a journal (20), is mounted on a crossbar of a traction vehicle so as to be rotatable about a bearing axis (22) parallel to the vehicle longitudinal axis, and with a coupling bolt (28) arranged perpendicularly to the bearing axis (22) which is arranged so as to be adjustable on the coupling jaw (12) by means of an actuating device (26) between a closed position in which it goes through the coupling jaw (12) and a coupling ring (32) engaging therein and an open position in which it is pulled out of the coupling jaw (12), wherein the actuating device (26) is arranged in a housing (24) fixed on the coupling jaw (12) and has a hand lever (52) mounted with a lever shaft (56) in the housing (24) which engages via at least one throw lever (60, 62) on the coupling bolt (28) for the adjustment thereof, **characterised in that** on the end section (38) of the coupling bolt (28) remote from the coupling jaw (12) a throw ring (42) is mounted which is freely rotatable in relation to the coupling bolt (28) and is essentially axially immovable and carries on its outer periphery at least one radially outwardly projecting radial pin (48), on which a throw lever (60, 62) engages which is in torque transmitting communication with the lever shaft (56) of the hand lever (52).

2. Trailer coupling according to claim 1, **characterised in that** the throw ring (42) carries on its outer periphery two diametrically radially outwardly projecting radial pins (48), on each one of which one of two throw levers (60, 62) engages, which on both sides of the coupling bolt (28) are in torque transmitting communication with the lever shaft (56) of the hand lever (52).

3. Trailer coupling according to claim 1 or 2, **characterised in that** the lever shaft (56) is mounted approximately in the middle of the adjusting stroke of the coupling bolt (28) in the housing (24).

4. Trailer coupling according to one of the claims 1 to 3, **characterised in that** the throw ring (42) is mounted on an end section (38) of the coupling bolt (28) with a smaller diameter between a shoulder (40) of the coupling bolt (28) and a support ring (44) which for its part is held by a securing ring (46) on the section (38) of the coupling bolt (28) with a smaller diameter.

5. Trailer coupling according to claim 4, **characterised in that** the throw ring (42), the support ring (44) and the section of the coupling bolt (28) directly bordering on the section (38) with a smaller diameter have essentially the same outer diameter.

6. Trailer coupling according to one of the claims 1 to 5, **characterised in that** the throw ring is guided in the housing (24) so as not to be twistable but to be adjustable in the axis direction of the coupling bolt (28).

7. Trailer coupling according to one of the claims 1 to 6, **characterised in that** the radial pins (48) on the throw ring (42) each engage in a slot (64) in the respective throw lever (60, 62).

8. Trailer coupling according to claim 7, **characterised in that** a semi-circular depression (70) is formed on the edge (68) of the respective slot (64) lying closer to the open position of the throw lever in such a way that the respective radial pin (48) on the throw ring (42) engages in the depression (70) in the closed position of the coupling bolt (28).

9. Trailer coupling according to claim 8, **characterised in that** a guide pin (72) is arranged on the throw ring (42) at a distance from the respective radial pin (48) in such a way that upon movement of the throw lever (60) from the open position into the closed position it is guided on the slot edge (68) comprising the depression (70) and prevents the radial pin (48) from going into the depression (70) until the closed position of the coupling bolt (28) is reached and **in that** a further recess (74) is formed in the throw lever (60), into which the guide pin (72) sinks if the radial pin (48) goes into the depression (70).

10. Trailer coupling according to one of the claims 4 to 9, **characterised in that** the support ring (44) has an annular shoulder (90) on its side remote from the throw ring (42) and **in that** close to the position of the support ring (44) corresponding to the closed position of the coupling bolt (28) a securing lever (78) is mounted so as to be pivotable about an axis (80) perpendicular to the coupling bolt axis (50) which can be adjusted between a secure position in which it projects into the adjustment path of the coupling bolt (28) and engages over the annular shoulder (90) of the support ring (44) and a release position.

11. Trailer coupling according to claim 10, **characterised in that** the securing lever (78) is coupled to a position display (94).

12. Trailer coupling according to claim 11, **characterised in that** the position display has an indicator pin (94) which is pre-tensioned in the direction of a cam track formed on the securing lever (78) and goes through the housing wall.

13. Trailer coupling according to one of the claims 1 to 12, **characterised in that** the coupling bolt (28) is pre-tensioned into its closed position and can be locked in its open position and **in that** the actuating device (26) has a release lever (112) projecting into the coupling jaw (12) which can be adjusted by a coupling ring (32) going into the coupling jaw in order to release the locking of the coupling bolt (28) so that the latter goes into the closed position with pre-tension.

14. Trailer coupling according to claim 13, **characterised in that** the lever shaft (56) of the hand lever (52) is connected in a rotationally secure way to two drive slide elements (90) which are in torque transmitting communication with the throw levers (60, 62) via a first cylinder pin (100) arranged parallel to the lever shaft (56) which goes through the drive slide elements (98) and the two throw levers (60, 62) in elongated holes (104, 106), **in that** one end of at least one spring (106) engages on the first cylinder pin (100), the other end engaging on the housing (24), and which spring (106) pre-tensions the throw levers (60, 62) in the direction of their closed position, whereby the housing-side contact point of the spring (106) is selected so that the line of action (122) of the spring (106), upon pivoting of the throw lever (60, 62) out of its end position corresponding to the closed position of the coupling bolt into its end position corresponding to the open position of the coupling bolt (28), goes through the axis (58) of the lever shaft (56) shortly before reaching said end position, **in that** the release lever (112) is mounted so as to be freely rotatable on the lever shaft (56) between the two drive slide elements (98) and is pre-tensioned by a spring (114) into a position in which its free end projects into the coupling jaw (12) and **in that** the release lever (112) has on the periphery of its end which is opposite the end projecting into the coupling jaw (12) a cam track (116) cooperating with the first cylinder pin (100).

15. Trailer coupling according to claim 14, **characterised in that** the cam track (116) comprises a depression (118), into which the first cylinder pin (100) goes in the end position of the throw levers (60, 62) corresponding to the open position of the coupling bolt (28).

16. Trailer coupling according to claim 14 or 15, **characterised in that** the drive slide elements (98) are connected in a rotationally secure way to the lever shaft (56) through pins (96) inserted in radial bores.

17. Trailer coupling according to one of the claims 14 to 16, **characterised in that** the two throw levers (60, 62) are connected to each other through a second cylinder pin arranged parallel to the lever shaft (56) of the hand lever (52) in such a way that the second cylinder pin lies on the release lever (14) in the end position of the throw levers (60, 62) corresponding to the closed position of the coupling bolt (28) and pre-tensions said release lever (14) into a position remote from the coupling ring (32).

## Revendications

1. Crochet d'attelage comportant un pavillon (12) destiné à recevoir un anneau de timon (32), qui est agencé à rotation à l'aide d'un tourillon (20) sur une traverse d'un véhicule tracteur autour d'un axe de palier (22) parallèle à l'axe longitudinal du véhicule, et comportant un boulon d'attelage (28), orienté perpendiculairement à l'axe de palier (22), lequel est disposé sur le pavillon (12) à l'aide d'un dispositif d'actionnement (26) de manière à pouvoir se déplacer entre une position de fermeture dans laquelle il s'intègre dans le pavillon (12) et dans l'anneau de timon (32) s'accrochant dans celui-ci, et une position d'ouverture dans laquelle il est dégagé du pavillon (12), moyennant quoi le dispositif d'actionnement (26) est disposé dans un boîtier (24) fixé sur le pavillon (12) et présente un levier à main (52) disposé avec un arbre de levier (56) dans le boîtier (24), lequel s'applique, par l'intermédiaire d'au moins un levier d'ajustement (60, 62), sur le boulon d'attelage (28) afin de régler celui-ci, **caractérisé en ce que**, sur la section d'extrémité (38) qui est éloignée du pavillon (12), du boulon d'attelage (28), est disposée une bague d'ajustement (42), qui peut tourner librement par rapport au boulon d'attelage (28) et est incapable de se déplacer dans une direction sensiblement axiale, et qui supporte, sur sa circonférence externe, au moins une goupille radiale (48) qui fait saillie radialement vers l'extérieur, sur laquelle est appliqué un levier d'ajustement (60, 62), qui est en relation de transmission de couple de torsion avec l'arbre de levier (56) du levier à main (52).

2. Crochet d'attelage selon la revendication 1, **caractérisé en ce que** la bague d'ajustement (42) supporte, sur sa circonférence externe, deux goupilles radiales (48) en saillie diamétralement et radialement vers l'extérieur, sur lesquelles s'applique respectivement l'un des deux leviers d'ajustement (60, 62), lesquels sont, des deux côtés du boulon d'attelage (2B), soumis à une relation de transmission de couple de torsion avec l'arbre de levier (56) du levier à main (52).

3. Crochet d'attelage selon la revendication 1 ou 2, **caractérisé en ce que** l'arbre de levier (56) est disposé quasiment au centre de la course de positionnement du boulon d'attelage (28) dans le boîtier (24).

4. Crochet d'attelage selon l'une quelconque des revendications 1 à 3, **caractérisé en ce que** la bague d'ajustement (42) est disposée sur une section d'extrémité (38), ayant un plus petit diamètre, du boulon d'attelage (28), entre un épaulement (40) du boulon d'attelage (28) et une bague de positionnement (44), qui est pour sa part maintenue grâce à une bague de sécurité (46) sur une section de plus petit diamètre (38) du boulon d'attelage (28).

5. Crochet d'attelage selon la revendication 4, **caractérisé en ce que** la bague d'ajustement (42), la bague de positionnement (44) et la section directement adjacente à la section de plus petit diamètre (38) du boulon d'attelage (28), ont sensiblement le même diamètre externe.

6. Crochet d'attelage selon l'une quelconque des revendications 1 à 5, **caractérisé en ce que** la bague d'ajustement est guidée sans pouvoir tourner, mais de manière à pouvoir se déplacer dans la direction axiale du boulon d'attelage (28) dans le boîtier (24).

7. Crochet d'attelage selon l'une quelconque des revendications 1 à 6, **caractérisé en ce que** les goupilles radiales (48), prévues sur la bague d'ajustement (42), s'accrochent respectivement dans une fente (64) ménagée dans le levier d'ajustement (60, 62) respectif.

8. Crochet d'attelage selon la revendication 7, **caractérisé en ce que**, sur le bord (68) situé le plus près de la position d'ouverture, du levier d'ajustement de la fente (64) respective, est configuré un renfoncement (70) en forme de demi-cercle, de telle sorte que la goupille radiale (48) respective, sur la bague d'ajustement (42), vienne s'encliqueter dans ledit renfoncement (70) dans la position de fermeture du boulon d'attelage (28).

9. Crochet d'attelage selon la revendication 8, **caractérisé en ce que**, sur la bague d'ajustement (42), une goupille de guidage (72) est disposée à une certaine distance de la goupille radiale (48) respective, de telle sorte que, lors du passage du levier d'ajustement (60) de la position d'ouverture à la position de fermeture, elle est guidée sur le bord de fente (68) présentant le renfoncement (70) et empêche à la goupille radiale (48) de tomber dans le renfoncement (70), jusqu'à ce qu'on atteigne la position de fermeture du boulon d'attelage (28), et **en ce que**, dans le levier d'ajustement (60), est configuré un autre évidement (74), dans lequel pénètre la goupille de guidage (72), lorsque la goupille radiale (48) parvient dans le renfoncement (70).

10. Crochet d'attelage selon l'une quelconque des revendications 4 à 9, **caractérisé en ce que** la bague de positionnement (44) présente, sur sa face éloignée de la bague d'ajustement (42), un épaulement annulaire (90), et **en ce que**, à proximité de la position correspondant à la position de fermeture du boulon d'attelage (28) de la bague de positionnement (44), un levier de sécurité (78) est disposé de manière pivotante autour d'un axe (80) perpendiculaire à l'axe du boulon d'attelage (50), lequel peut se déplacer entre une position de sécurité dans laquelle il parvient dans la trajectoire de positionnement du boulon d'attelage (28) et chevauche l'épaulement annulaire (90) de la bague de positionnement (44), et une position dégagée.

11. Crochet d'attelage selon la revendication 10, **caractérisé en ce que** le levier de sécurité (78) est accouplé à un indicateur de position (94).

12. Crochet d'attelage selon la revendication 11, **caractérisé en ce que** l'indicateur de position présente une goupille indicatrice (94), qui est précontrainte en direction d'une trajectoire de came réalisée sur le levier de sécurité (78), et traverse la paroi du boîtier.

13. Crochet d'attelage selon l'une quelconque des revendications 1 à 12, **caractérisé en ce que** le boulon d'attelage (28) est précontraint dans sa position de fermeture et peut être bloqué dans sa position d'ouverture, et **en ce que** le dispositif d'actionnement (26) présente un levier de déclenchement (112) s'accrochant dans le pavillon (12), lequel peut être déplacé grâce à un anneau de timon (32) pénétrant dans le pavillon, afin de provoquer le blocage du boulon d'attelage (28), de telle sorte que celui-ci passe dans la position de fermeture sous l'effet de la précontrainte.

14. Crochet d'attelage selon la revendication 13, **caractérisé en ce que** l'arbre de levier (56) du levier à main (52) est relié de manière résistante à la rotation à deux coulisses d'accouplement (98), qui sont en relation de transmission de couple de torsion avec les leviers d'ajustement (60, 62) par l'intermédiaire d'une première goupille cylindrique (100) orientée parallèlement à l'arbre de levier (56), laquelle fait passer les coulisses d'entraînement (98) et les deux leviers d'ajustement (60, 62) dans les trous oblongs (104, 106), de telle sorte qu'au moins une extrémité du ressort (106) s'applique sur la première goupille cylindrique (100), tandis que l'autre extrémité s'applique sur le boîtier (24), et précontraint le levier d'ajustement (60, 62) en direction de sa position de fermeture, moyennant quoi le point d'application, côté boîtier, du ressort (106) est choisi de telle sorte que la ligne d'action (122) du ressort (106), lors du pivotement du levier d'ajustement (60, 62) à partir de sa position finale correspondant à la position de fermeture du boulon d'attelage jusqu'à la position finale correspondant à la position d'ouverture du boulon d'attelage (28), peu avant qu'il n'atteigne celle-ci, passe par l'axe (58) de l'arbre de levier (56), et de telle sorte que, entre les deux coulisses d'entraînement (98) le levier de déclenchement (112) est disposé en pouvant tourner librement sur l'arbre de levier (56), et est précontraint par un ressort (114) dans sa position dans laquelle son extrémité libre s'accroche dans le pavillon (12), et **en ce que** le levier de déclenchement (112), au niveau de la circonférence de son extrémité, qui est opposée à son extrémité s'accrochant dans le pavillon (12), présente une trajectoire de came (116) coopérant avec la première goupille cylindrique (100).

15. Crochet d'attelage selon la revendication 14, **caractérisé en ce que** la trajectoire de came (116) présente un renfoncement (118), dans lequel pénètre la première goupille cylindrique (100) dans la position finale du levier d'ajustement (60, 62), correspondant à la position d'ouverture du boulon d'attelage (28).

16. Crochet d'attelage selon la revendication 14 ou 15, **caractérisé en ce que** les coulisses d'entraînement (98) sont reliées de manière résistante à la rotation avec l'arbre de levier (56) par l'intermédiaire de goupilles (96) insérées dans des alésages radiaux.

17. Crochet d'attelage selon l'une quelconque des revendications 14 à 16, **caractérisé en ce que** les deux leviers d'ajustement (60, 62) sont reliés l'un à l'autre par l'intermédiaire d'une deuxième goupille cylindrique orientée parallèlement à l'arbre de levier (56) du levier à main (52), de telle sorte que la deuxième goupille cylindrique repose sur le levier de déclenchement (14) dans la position finale du levier d'ajustement (60, 62) correspondant à la position de fermeture du boulon d'attelage (28), et précontraint celui-ci dans une position éloignée de l'anneau du timon (32).
